# EUROPEAN PATENT APPLICATION

(11) **EP 1 739 588 A1**
(43) Date of publication of application: **03.01.2007**
(21) Application number: 05425472.7
(22) Date of filing: 30.06.2005
(51) Int. Cl.: G06F 21/00

(54) **Method and system for registration and user identification of web users**

(71) Applicant: Exo System Italia SRL, 00151 Roma (IT)
(72) Inventor: Orlandi, Marco, 00149 Roma (IT); Borromeo, Carlo, 20126 Milano (IT)
(74) Representative: Sarpi, Maurizio

(57) **Abstract**

A method and a system to grant access to a plurality of users simultaneously to digital services and contents enjoyable through the Internet or similar communication networks, identifying each user, having the right to, who makes use of a phone communication device and the relevant fixed or mobile subscription, that can transmit an identifying code (called "CALLER ID").

The indicated phone device is then used as a secondary authentication channel to recognize the web user having the right to enjoy the digital services or contents supplied through the primary communication channel (the Internet or similar communication networks) that will be used to provide the requested services or the reserved information.

"A method for subscribing to one or more online services or digital contents and for identifying, through a phone call, a plurality of web users who have rights to use reserved digital contents or online services, or for identifying, always through a phone call, the uniqueness of their preferences within soundings or polls suggested on Websites (using Internet) or through other forms of communication."

## Description

### Brief invention summary

The present invention relates to a method for subscribing to one or more online services or digital contents and for identifying, through a phone call, a plurality of web users who have rights to use reserved digital contents or online services, or for identifying, always through a phone call, the uniqueness of their preferences within soundings or polls suggested on Websites (using Internet) or through other forms of communication."

This invention deals with secure website accessing, and more particularly with the access to services and digital contents available on Internet or on assimilated IT networks, through the simultaneous identification of each user having the right to use them, who uses a phone communication device and the relevant mobile or fixed line phone subscription able to transmit an identification code (namely "CALLER ID"), carried out in accordance with the characterized part of the independent claims.

The quoted phone device will then be used as a secondary authentication channel to carry out the identification of the web user having the right to enjoy digital services or contents, distributed through the primary communication channel (internet network or assimilated IT networks), by which the reserved information or the demanded services will be distributed.

The method, object of this invention, permits the management of multiple "Service Codes" associated with specific functionalities provided by a Web Content Server. This one will be able to deploy reserved services or contents to each previously registered user who has carried out the access procedure using the method here described and pointed out within the characterized part of the independent claims.

The method used for the registration procedure consists in the generation of a personal unique code that will be associated to the service code at the moment of the subscription request and properly communicated to the user (via web, e-mail, by mail, by phone or by any other form), it has to be transmitted by the user himself through an SMS (or through analogous way) to a pre-established number to complete the registration procedure.

This invention also provides a method and a system that can be used to ensure the uniqueness of the preference expressed within soundings or polls suggested through the Internet, asking the voter to dial a phone number as a confirmation and let the phone ring just once to confirm his expressed preference chosen through proper website pages.

### Terminology

Here you can find a glossary useful to identify the terms used in operations concerning the system:
Web user: the person who enters a website using a proper software called Web Browser.
IP Address: reference number concerning the IP Protocol that identifies unequivocally a particular network and a host on that network connected to the Internet.
SIM Card: short for *subscriber identity module,* a smart card inside of a GSM mobile phone that stores data about the specific user so that the user can be identified and authenticated, through a unique CALLER ID, to the network supplying the phone service.
CALLER ID: identification number, possibly corresponding to the telephone number of the phone device used by the web user who asks for admittance to the protected contents available on the "Contents Server", using a fixed or mobile communication device.
Contents Server: Web Server, identifiable by a proper IP Address (Internet Protocol Address) that maintains reserved digital contents, protected from access through the user identification system here described.
Authentication Server, also described as "Access Service": Web Server, identifiable by a proper IP Address (Internet Protocol Address), that, when requested by the Contents Server, allows to send back to it a positive or negative answer related to the identification of a user asking for admittance, previously stored and "authorized" to access the reserved digital contents available on the Contents Server.
   The Authentication Server is provided with a "connection device" enabling it to interact with the telephone network, this device is designed to carry out the caller identification, allowing the connection with the telephone network through one or more phone devices (possibly GSM or similar devices such as a PBX switchboard) properly adapted. Each of these devices is strictly related to a phone number reachable by all fixed or mobile phone devices, whose number is selectable through a call using even an international phone network.
   These phone devices are therefore able to identify the caller number or his unique code and to communicate it to the Authentication Server to which they are interfaced through the said connection device.
Web Browser: a software package that enables a user to display and interact with documents and pages of contents hosted by Contents Server through a connection to Internet.
Session Code: unique code concerning a connection between two IP addresses of the Internet. One of the two Internet systems starts a connection and this communication permits to carry out an order or a request that produces a corresponding answer back to the IP address that first made the request. In particular, a session code is assigned by an Internet server when a Web user starts a connection to a page available on the same server through a Web Browser and when he makes a request that requires a transaction with the server, clicking for example on a proper button on that page.

The method and the system, object of this invention, will be described with reference to the admittance to non-public information (only reserved to those who have the right to) available on computer files and data residing on an information provider server (called "Contents server").

This method can be used to provide services to the user, such as, for example, access to reserved areas, soundings, electronic booking and/or tickets and also to create a permission code to access reserved contents of an organization that doesn't want to know the identity of the 'User', but who needs to have a personal or group identification, e.g. when it needs to grant some doctors or medicine informers the exclusive access to medical information, excluding those people having no rights according to present law or for a matter of reserve of the published information.

Using this method, a company or a person, who provides services (maintaining a dedicated "Contents Server"), can reserve the access to his own services only to authorized users, these users will be identified by the "Authentication Server", without the need to preserve any personal identifying data of each User (except for the numerical code of the phone subscription) which is subject to security and prescriptive clauses imposed by the privacy laws in effect.

### Description of the method

The method here described concerns the use of:
1) a computer connected to the Internet and provided with a software called "Web Browser".
2) a mobile GSM phone device or an equivalent device, whose transmission protocol is able to send an identifying and unique phone number strictly connected with the device itself or with a "SIM Card" introduced in it and given by the phone service manager to the owner. This invention claim includes also other devices, that are different from mobile phones and that use protocols different from GSM, but that can transmit a call together with an identifying code of the caller.
3) a web server in which digital contents are stored or by which services are provided to the user that has the right to enjoy them. This server is called "Contents Server".
4) an authentication web server linked to a proper phone device that can identify and send the caller number, as previously described in "Authentication Server". This server will be linked to this device and it will be provided with a proper software to manage the caller number (also known as the CALLER ID) and to use it as a search key in special tables previously saved.

### Method concerning the registration of the Web User to the required services.

Having to receive the admittance authorization to the service provided by the "Contents Server", the "Web User" has to sign in first. Through this signing in, the "Authentication Server" will save the phone number of that user, either a fixed line phone number or the one related to the "SIM card" used inside the mobile phone, and it will couple this number with the "Service Code", concerning the service the user wants to enjoy.

Either the service supplier (a company, a person or an organization) that manages the "Contents Server" or directly the "Web User" can record the numerical code of the phone subscription concerning the device used by the "Web User" longing to have admittance to contents or to provided services.

The alternative methods to allow the user signing in are here described:
1) on-line. The Web User will be able to sign in using a proper function available through a Web Browser software and a computer linked to the Internet. The "Authentication Server" will transmit a web page containing a unique code associated with the user request and the chosen service code concerning the reserved contents supply the user wants to enjoy. This code will be called "User Code".
2) The supplier, organization or person, that manages the service (through the "Contents Server") transmits to the "Web User" the unique "User Code" associated with the user request and the chosen service code concerning the reserved contents supply the user wants to enjoy either via a verbal and/or written communication, or via email.
3) The service supplier, that is the organization or the person that manages the "Contents Server", can directly register the user and the requested service using a proper software procedure that allows to input the phone subscription number of the user requesting the service and to associate it to the requested service.

The User has to send the provided "User code", received through the ways 1) or 2), to a proper phone number using an SMS text message. The phone device used to send this SMS text message will have to be used to access the reserved contents and services, following the admittance procedure here described.

This signing in procedure must be carried out just once and it will allow the subsequent identification of the User through a simple phone call, dialling a phone number indicated at he moment of the access and letting the phone ring just once for each authentication request.

Through this signing in procedure, the "Authentication Server" can receive and save the phone number ("Caller ID") of the device used to send the SMS text message that includes the code, and it can associate it to the requested service, filling in a proper table with this information and qualifying it for access.

Once received the SMS text message including the code, the "Authentication Server" can verify the validity of that code and it can extract the "Caller Phone Number" (sent with the SMS text message), saving it together with the "Service Code". This matching is necessary during a possible subsequent authentication stage, started when the user wants to enjoy reserved contents or services.

The "User Code", used during the signing in, can be also used to withdraw from a service, this is done by sending an SMS text message, that includes the same code, to the authentication server's phone number dedicated to service cancellations , this is a number different from the one used for the signing in. Once received a code to the cancellations phone number, the "Authentication Server" verifies its validity and goes on with the cancellation of the matching "Service Code" - "User Code" previously saved and related to the received "User Code".

### Admittance procedure to the reserved digital contents.

When the "Web User" that has been previously registered, wants to be authorized for the admittance to reserved contents and services and for their subsequent vision, he needs to use a suitable device for the connection to the Internet (personal computer, palm PC or others), provided with a "Web Browser" software and he will access the web site concerning the "Contents Server" typing its IP address or its equivalent web name (web domain).
After receiving the "Web User"'s access request (that can be carried out directly accessing a web page, or by clicking on a proper button displayed on the web page), the "Contents Server" will ask the "Authentication Server" to assign a phone number to be shown to the user.

When answering this request, the "Authentication Server" will communicate a phone number to the "Contents Server", choosing it among the available phone numbers concerning the GSM phone devices connected to the "Authentication Server" through the proper "Connection Device".
Once received the phone number from the "Authentication Server", the "Contents Server" will show this phone number to the "Web User" through a web page properly generated.

The "Web User" is then kindly requested to call the displayed phone number using his own fixed or mobile phone subscription (previously used for the signing in), and he is asked to let the phone ring at least once to allow the transfer of his "CALLER ID" used for the identification. (The called phone device, connected through a "Connection Device" with the "Authentication Server", does not need to answer the call and it can automatically interrupt the communication after having identified the "CALLER ID" transmitted together with the first ringing.)

The phone number that the user has to call and all the others available for this task are those made available by the GSM phone devices connected to an appropriate device ("Connection Device") that can transfer both the caller phone number and the called phone number to the "Authentication Server".

The "Authentication Server" can save the event related to the call reception together with date and time.
The information about the caller phone number and the called phone number are used by the same "Authentication Server" to identify the user among the signed in ones and among those who have the right to use a specific service requested from the "Contents Server" (when the infrastructure is used to verify the access rights to more than one service located on the same "Contents Server" or on different ones, it is expected to save and manage a code that identifies unequivocally that particular service.)

### User recognition procedure for the access to reserved and protected digital contents. Functioning in case of simultaneous access requests.

After having received (through a connection to the Internet) a request by the "Contents Server", and after having communicated successfully (always through a connection to the Internet) the phone number to be called, the "Authentication Server" will start a waiting procedure for a call on that phone number that will be dialled by a phone user.

During this waiting time (the maximum time duration is defined in parametric mode) the chosen phone number (to be dialled by the "Web User") will not be made available for other purposes and it will be "locked" by a proper software procedure that will indicate it as NOT available for other requests that simultaneously may come from this "Contents Server" or from other ones.

In case of simultaneous access requests to the same or other "Contents Server" (possibly received after some access requests by other "Web Users") unique phone numbers will be communicated to each chosen among those numbers still available (those not already locked by the software because in use) connected to the "Authentication Server" through the proper "Connection device".

A phone number (related to the GSM phone devices connected and available at the "Authentication Server") will be shown to the "Web User" asking for access and it will be reserved to that access procedure and not available for other users as long as the authentication process lasts or until the maximum waiting time expires.

Through the method, here described, the session identification associated to the matching "Session Code"+"IP address" activated by the "Web User" is unique and related to the phone number chosen by the "Authentication Server" and shown to the "Web User" through the "Contents Server".

Once requesting the access to the reserved or protected contents, the user will dial the phone number shown on the web page and the "Authentication Server" will detect the caller phone number through the "CALLER ID" associated to the call.

If the user calls within the predefined maximum time (e.g. 1 minute), the "Authentication Server" will detect the caller phone number and will verify the match between the phone number received through the "CALLER ID" (available through the phone devices connected to the "Authentication Server" through the "Connection Device") and the list of the phone numbers saved after the signing in phase.

If the matching of information concerning the caller phone number and the requested service results on the list (which is stored on appropriate computer data base table), the "Authentication Server" produces an access authorization for the IP address and the session with which the user himself was connected through a Web Browser, and to this authorization it also associates a unique identification code related to the user detected on the basis of the "CALLER ID" number received together with the call.

This authorization will be communicated by the "Authentication Server" (through a connection to the Internet) to the "Contents Server" that will decide to grant access to the web session of the "Web User" asking for admittance.

### Detailed description about the identification method of the user who has got the right to access the Web services made available by the "contents server"

An example is given to simplify the comprehension of the method working. It is related to the attached drawings that show a typical application of this invention.

As far as the drawings are concerned, hardware Components are identified by a progressive code starting with a "C", memory Data by a progressive code starting with a "D", and the described Processes by a progressive code starting with a "P". Codes are the same in each drawing, so that the same component/memory/process corresponds to the same code.

Figure N.1 shows the main hardware components involved in the process (high level technical architecture). Four areas are represented through a circular background of different colour and they refer to the four main process actors: "End User" is the one who enjoys a service not available to the public; "Service Provider" is the supplier of the service that requires the access authentication; "Telecom Provider" is the phone services provider (the final user provider is the same provider of the authentication service, for simplicity); "Access Service", is the detection and identification service provider that uses this invention.

Figure N.2 defines at high level the supposed database for the method and system implementation.

Figure N.3 describes an hypothetical identification process of a user and the ways through which the relevant service is distributed.

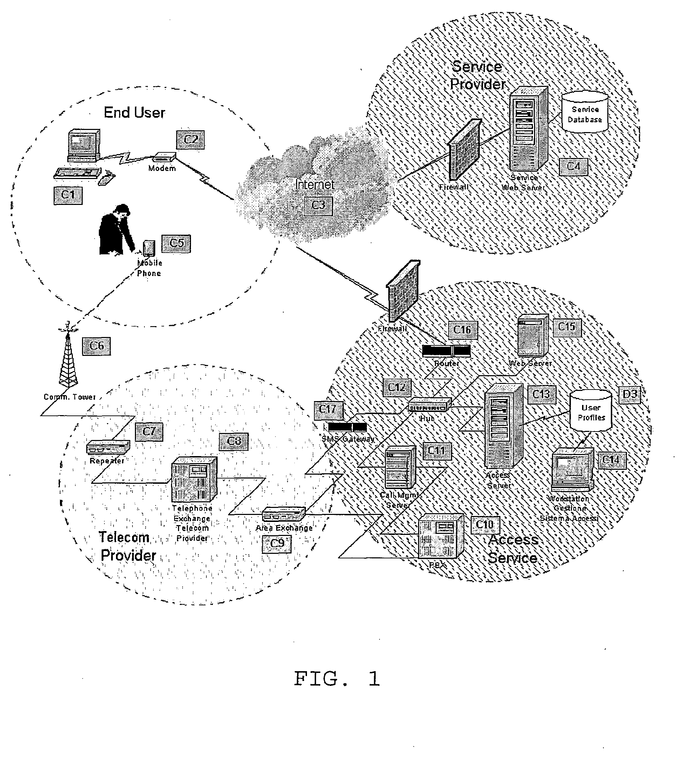

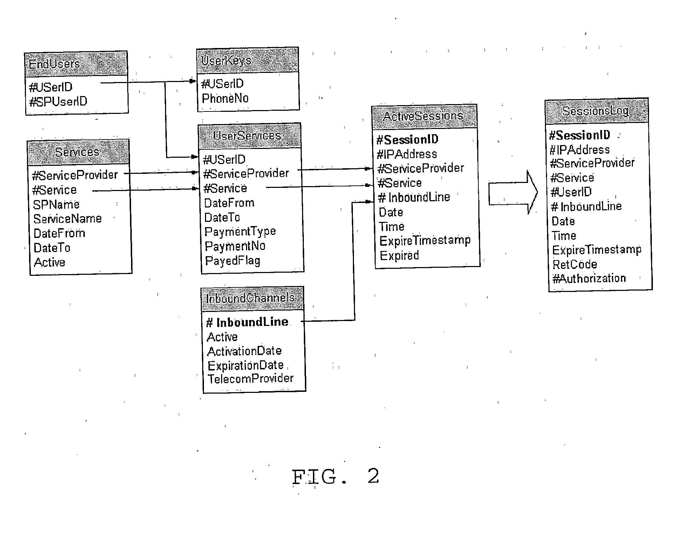

Figures 1 and 2 suppose the use of a "wireless" phone owned by the end user (C5). But the same process is valid also when the user dials the call through a fixed line phone.

As far as Figure 1 is concerned, the "End User" is provided with a computer (C1) connected to the Internet (C3) through a modem (C2). This computer is provided with a "Web Browser" software to access the requested service. The architecture of the Internet service supplier is not described because it is not meaningful for the invention illustration described in this document.

The "Service Provider" has got its own infrastructure (C4) to manage the supplied service. It includes one or more servers, database and communication and security infrastructure. The user accesses the supplied service using a web browser software, indicating a web address (URL) corresponding to the registered domain of the service provider and connected to the web server IP address, through which this service is available for the users having right to enjoy it.

The end user identification service is dealt with various components:
(C10) PBX Switchboard, GSM/modem equipment or similar components,
(C11) Server that receives the calls,
(C12) Net Hub,
(C13) Server that manages the identification ("Authentication Server"),
(C14) Workstation to manage the overall system,
(C15) Server that manages the web pages ("Content Server"),
(C16) Router,
(C17) SMS Gateway to send confirmations through SMS text messages.

These components are interconnected and the user identification happens in accordance with the process described in the Figure N.3, that is:
when the end user wants to access a specific protected area (services or information), clicking on a link on the HTML page open to the public (P1), an "actor program" situated on the "Content Server" Service Provider web server (C4) detects the end user IP address and session code and transmits it to the "Authentication Server" (Access Service management server) (C13), together with a request for the beginning of the authentication procedure, using a safe Internet connection (C3) (a proper security protocol prevents 'hacking' of the transmitted codes).

Besides the end user IP address, the transmitted request message contains the identity unique code of the service supplied by the Service Provider (provider code + service code). This code allows to detect the group of users entitled to join and use that particular service.

The request message transmitted by the "Content Server" Service Provider web server (C4) is received by the "Authentication Server" (C13) through a communication infrastructure (C3 and C16). This Authentication service draws a phone number by lot (P2) among those available inside a group of phone numbers (D1) available at the identification service provider "Authentication Server". These phone numbers have to be qualified to receive calls and they must be connected to the device that detects the "CALLER ID" (the caller phone number) or an unique phone number related to him.

The chosen phone number will be qualified to receive phone calls and it will not be made available for subsequent drawings for the fixed short time (one or two minutes) that is necessary to finish the entire identification process of that specific user.

If no calls are received to that phone number during the predefined short time period, the process will end with a negative result and the phone number lock will be released so that the number is again available to be drawn by the access procedure.

The calls management server of the "Authentication Server" (C11) will send the number of the chosen phone together with the IP address and session code of the end user computer (C1) back to the "Access Service" web server (C15) that in turn will show an access web page (C3) containing an image displaying that phone number, the user will now have to dial the displayed phone number.

The web page, asks to dial the displayed phone number using the phone subscription (fixed or mobile) previously used to register to the service, within a short period of time (e.g. 1 minute). Figure 1 shows the case in which a mobile phone (C5) is used to dial the number and gain access.

Through communication infrastructures (C6, C7, C8 and C9) of the communication service provider, the user call arrives to a device (switchboard or GSM/modem device) (C10) of the identification service provider "Access Service" that is connected to a server (C11) able to identify, through it, all the calls arriving, to detect the caller phone number and to identify which phone number has been called.

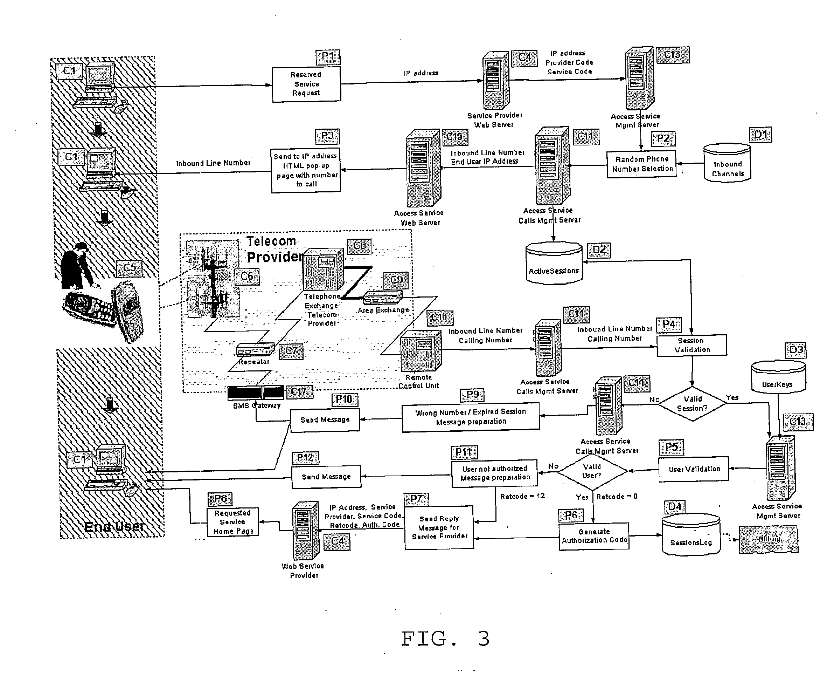

For simplicity Figures 1 and 3 show only a Telecom Provider for the call transmission process.
It is therefore probable in a real situation that more than one communication provider is present to accomplish the described task.

This document does not show the technical architecture and the protocols used to transmit the call, because those are not important for the description of the proposed invention.
However it is important to notice that the possibility to transmit the call together with the caller phone number, or alternatively a unique number strictly concerning to him, is a necessary requirement for the working of the method and system here described.
If this possibility is available the described process can be performed, hence this feature has not to be disabled for the identification process to take place.

Once a received call has been identified, the calls management server of the "Authentication Server" (C11) verifies that the called phone number is still in a "waiting status" (that is, the predefined expiry short period is not over) (P4), looking at the "Active sessions" memory (D2), and, if the period of time is not over, it matches the received call and the IP address to which that phone number was sent.
Through this matching then the calls management server of the "Authentication Server" (C11) gets the service code associated to the IP address and previously sent together with the authentication request.
Subsequently, after looking at the database containing all the profiles signed in for the service, and using the service code and the caller phone number, it goes on with the user authentication (P5).
If the phone number received corresponds to an existing valid name of the profiles database (D3), the authentication can be confirmed and it will have a positive result.
A message containing the service code, the IP address and a positive result code (if the user has been identified) or a negative result code (if he has not been identified) is sent back (P7) to the "Content Server" Service Provider (C4).

The message may contain other information, such as an authorization progressive number, or a payment reference, and so on.

If the called phone number is not included among those awaiting (D2) and the caller used a phone line that supports the SMS communication, the server (C11) composes (P9) and sends (P10) a message of calling phone error (C5) through an SMS gateway (C17) and the Telecom Provider communication infrastructure (C7 and C6).

If the called phone number is right, but the call arrives beyond the predefined period of time, the server (C11) composes (P9) and sends (P10) an answer message to the end user computer (C1), asking him to repeat the identification procedure.

If the caller phone number does not correspond with any of the authorized end user profiles, the server (C13) composes (P11) and sends (P12) a message of missed recognition to the end user computer (C1 and simultaneously a similar message to the Service Provider server (C4).

### Process of user registration (e.g. service subscription)

As already explained, the registering process of the authorized end users profiles may take place through a reserved access to the Service Providers that is protected by User ID and Password.

As alternative option an online function may be expected to allow the end users to register directly and eventually this function may be linked to a payment service (credit card, phone credit use, phone bill debit).

It is also possible a mixed system in which the Service Provider sends a "Customer Code" to the End User and then the End User will use that code to communicate his own phone number to the Access Service. This communication may be send via Web, SMS or through a call to an operator or through another way.

### Method concerning the voter identification in a sounding or in a poll proposed on web pages through the Internet.

Here is explained a different application for this invention. By using it, it is possible to get unique votes from single voters expressing their preference in web polls, or in other situations where it is necessary to express a unique preference concerning different options on a web page or on press, TV or other media polls.

As far as a web poll is concerned, the voting user visits a page on the Internet that shows different available options. Once selected the desired option the user needs to confirm his choice through a phone call to a predefined phone number.
The phone number shown to the user is drawn by lot by the Authentication Server, just like the one drawn for the authentication concerning a service access. In this particular case, however, the user did not previously follow a registering procedure to the service.

As previously shown, the authentication server will immediately hang up the received call and it is not necessary to establish a lasting phone conversation.

The procedure is similar to the one used for the user identification, but in this particular case, the access server will confirm that the user did not express other preferences for the same sounding or poll.

The authentication server will detect the user call just as a confirmation of the expressed preference, it does this task by saving the caller phone number after the first vote, it will be later used just to verify subsequent attempts to vote again. The authentication server will not confirm and hence save a new preference from the same user, if it has already been expressed.

The contents server will save the positive or negative indication about the authentication server confirmation and it will be able to increase the vote counter concerning the proposed sounding or poll just in case of a positive answer.

### OPERATION SEQUENCE CONCERNING THE EXPOSED METHODS

### A) Signing in method to a service through SMS text message

1) The user accesses the signing in web page
2) He chooses the service, he inserts information and eventually he pays the service subscription through a payment system in Internet (optional to the described system and not compulsory for the entire process).
3) The system generates a unique code for the user, associating it to the requested service and saving it in a temporary table of "codes waiting to be registered" (the couple "user code"-"service code" is stored)
4) A personal unique code is notified to the user (immediately through a web page, via email, ordinary mail or via other ways). He takes note of the communicated personal code and of the phone number to which he has to send the SMS text message.
5) The user sends the received code to the indicated phone number through an SMS text message
6) The "Authentication Server" is connected to the phone network through a proper device and receives the message, from which it extracts the caller phone number. It compares the code enclosed inside the SMS text message with the data inside the temporary table of the "codes waiting to be signed in", that also contains the requested service code.
7) If the confirmation is positive (the code was found inside the temporary table), that code will be eliminated from the temporary waiting table and the registering procedure goes on by saving into the users table various information, such as: the caller phone number, the associated service code (taken from the temporary table) and the personal user code, together with reference information such as: date and time of the operation and the IP address from which the request started. This user table will remain as a reference for later authentication of users asking for access with the access method already exposed.

### B) Method for the cancellation from registration to a service through an SMS text message

1) The user has to send an SMS text message containing the saved personal code previously used to sign in to a proper cancellation phone number
2) The "Authentication Server" receives the SMS text message to this number and it compares the inserted code with data inside the user table
3) If it finds the code, it also matches the associated stored phone number with the phone number that sent the SMS text message and if both information match (that is if the access keys to the table "personal user code" and "phone number" really correspond to an element inside the table), it deletes the corresponding row, thus effectively eliminating that user from that service access.

### C) Method to access a reserved area or to enjoy a protected service after a previous user registration carried out using the method indicated in the paragraph A.

1) When a user wants to enjoy reserved or protected services or contents, he has to visit an access web page purposely dedicated to the service to which he previously signed in using the method described inside the paragraph A.
2) The access web page shows (directly or after the clicking on a button visible on the screen) a phone number to be dialled by the user using his own phone device (the user must necessarily use the device with which he also signed in).
3) Simultaneously with the access, the "Contents Server" sends an authentication request for the specific "Service code" (associated to the Service the user wants to have access for) to the "Authentication Server", and waits for an answer that is going to be positive (the user request is satisfied) or negative (access denied).
4) The user dials the phone number.
5) The "Authentication Server" receives the call and verifies if the caller phone number matches an entry in the user table that associates "Service Code" - "User phone number". For this check it uses the "Service Code" previously sent to it by the "Contents Server", that in the meanwhile is waiting for an answer.
6) If that phone number exists and if the match is successful, the "Authentication Server" will send a positive confirmation to the "Contents Server" that can this way grant the access to the reserved areas, through an automatic redirection to the requested protected web page.
7) After the call (that needs just one phone ringing and that will not be answered, and hence the line will be automatically hanged up after first ring) the authorized user will simply see the access page change on his 'Web Browser' and he will be able to enjoy the service provided by the "Contents Server" or access the reserved information presented by it.
8) The unauthorized user will see the web page change showing a warning message with the denied authorization.

## Claims

1. A method to grant to a plurality of users simultaneously the access to services enjoyable through the Internet or similar networks, that form a first communication channel, **characterized by** the fact that the identification of each user, who has got the right to enjoy them, is carried out uniquely (meaning that the user has not to input any personal identification code through the said first channel) through a fixed or mobile phone communication device that, activated by the user, transmits to the authentication server, a unique identification code, corresponding to the fixed line or mobile phone subscription of the user himself ("Caller ID), or a similar code concerning it that will be used by the server to grant or deny the access.

2. A method according to claim 1 **characterized by** the fact that the phone number the user has to dial on his phone communication device is communicated in real time from the service provider through a web page after the user expressed the access request; and by the fact that the said phone number is automatically chosen by an Authentication Server among those ones enabled for the reception provided by the service supply manager, and its number is made available for user to dial it, e.g. it is qualified to receive calls for a predefined period of time.

3. A method, according to the preceding claims, **characterized by** the fact that the user identification occurs when: One of the service supply manager phone number lines, enabled for reception, receives a call by the user who dials that number using a fixed or mobile phone device; and after the call the caller phone number or a unique code concerning it is identified by the system that receives the call itself without establishing a phone connection and this received call is considered valid only if carried out within a predefined period of time starting from the request; said predefined period of time being set through a parametric way.

4. A method according to claim 3 **characterized by** the fact that the user call is interrupted before answering and no phone connection is established, in such a way that no expenses at all being chargeable to the user calling.

5. A method according to claims 2 and 3,
**characterized by** the fact that:
the caller phone number (CALLER ID), or a code concerning to it, is identified by the service provider through the Authentication Server, which is connected to the telephone line through a phone connection device, verifying if it corresponds to one of the phone number associated to the users having the right to enjoy the requested service, and
all the users have to be previously saved and related (associated) to one or more active services and the access (to the service or to the web page) is granted only if this check matches positive, sending a confirmation message to the "Contents Server" that presents reserved digital contents, protected from access through this identification system, while the sent message will be negative or however different if the caller phone number or the code concerning it does not correspond to any of the phone numbers related to the users having the right to enjoy those reserved contents.

6. A method according to claim 4, **characterized by** the fact that registration to a desired service is carried out by the user through the transmission of an SMS text message used for subscription. This SMS text message must be sent from the phone device that will be next used for the access, it will contain a unique code generated by the system and previously communicated to the user in any form (written, by postage mail, web or any manual or electronic transmission). The transmission of this code permits the authentication Server to relate the received personal code and the phone number that sent it, to a service code previously saved in a temporary table and it permits to complete the registration procedure if and only if the received code corresponds to the one previously saved into the temporary table at the moment of the registration request.

7. A method accordinf to claim 1 **characterized by** the fact that all the access requests and their relevant results (access logs) are chronologically saved in electronic form by the "Authentication Server".

8. A method according to claim 1 **characterized by** the fact that a system or method of payment/collection or charge for the service supplied to the end user by the service provider is associated to the identification/access process.

9. A method according to claim 4 **characterized by** the fact that the "Contents Server" receives a message from the "Authentication Server" containing the identification process result that permits either to automatically start the redirection to the web pages with reserved contents or to display a page containing the message of negative identification result and denied access.

10. A method according to claim 5 **characterized by** the fact that the user receives a message containing the registration process result through an SMS text message (Short Messaging Service); from that moment the user is considered registered to the requested service and the access is granted by following the procedure as claimed in claims 1 and 2.

11. A method according to claim 1 **characterized by** the fact that the user phone number required for user registration is sent or communicated directly to the "Contents Server" manager who manually updates the correlation User-Service through a management procedure carried out by a proper software program.

12. A method according to claim 1 **characterized by** the fact that the end user phone number (or any other code associated to it) does not need to be previously registered by the system to provide access identification to a poll made available through the Internet and calling a phone number supplied by the "Authentication Server" is only necessary to confirm the preference expressed by the user through the choice of a selectable option on a proper Internet web page.

13. A method according to claims 1, 6, and 11
**characterized by** the fact that the Authentication Server keeps a record of the calls coming from the same user phone number concerning the same service and this record is used to prevent the vote of more than one preference coming from the same phone device used by the web user (e.g. during soundings any user can vote only for one preference and successive votes will thus be discarded).

14. A method according to claim 1 **characterized by** the fact that the end user is not previously registered and the call to a phone number provided by the "Authentication Service" is necessary to book a service (for example a theatre or cinema seat), and that he receives an acceptance receipt (via SMS, Web, Email, fax, ordinary mail) to be shown when he wants to enjoy the service or to transfer his right to others.
